# EUROPÄISCHE PATENTSCHRIFT

(11) **EP 0 455 932 B1**
(45) Veröffentlichungstag und Bekanntmachung des Hinweises auf die Patenterteilung: **20.07.1994**
(21) Anmeldenummer: 91100930.6
(22) Anmeldetag: 25.01.1991
(51) Int. Cl.: G01P 3/488

(54) **Anordnung zur Positionserfassung oder zur Geschwindigkeitsmessung eines mindestens teilweise ferromagnetischen beweglichen Körpers**
Assembly for measuring the position or speed of a movable body being at least partially ferromagnetic
Appareil de mesure de la position ou de la vitesse d'une pièce mobile au moins partiellement ferromagnétique

(30) Priorität: 09.05.1990 CH 1572/90
(43) Veröffentlichungstag der Anmeldung: 13.11.1991
(73) Patentinhaber: Landis & Gyr Technology Innovation AG, 6301 Zug (CH)
(72) Erfinder: Seitz, Thomas, Dr., CH-6300 Zug (CH); Popovic, Radivoje, Dr., CH-6300 Zug (CH)

(56) Entgegenhaltungen:
- DE-A- 1 523 191
- GB-A- 800 504
- US-A- 2 807 014
- US-A- 3 559 064
- US-A- 3 961 214

## Beschreibung

Die Erfindung bezieht sich auf eine Anordnung zur Positionserfassung oder zur Geschwindigkeitsmessung eines mindestens teilweise magnetischen und mit Zähnen verschenen beweglichen Körpers gemäss dem Oberbegriff des Anspruchs 1.

Solche Anordnungen können beispielsweise in Motoren, Getrieben oder Bremssystemen von Autos verwendet werden zur Messung der Drehzahl eines rotierenden Körperteils, z.B. eines Zahnrades.

In gewissen Anwendungen ist es dabei oft erforderlich, sehr niedrige Geschwindigkeiten hinunter bis inklusive einer Geschwindigkeit Null zu messen. In Antiblockiersystemen von Autobremsen muss beispielsweise die Drehzahl von Autorädern bei Geschwindigkeiten unterhalb 20 km/h gemessen werden, wobei es dann auch besonders wichtig ist, den Stillstand der Räder, d. h. die Geschwindigkeit Null zu ermitteln. Dies ist mit bekannten, rein elektromagnetischen und nur nach dem Induktionsprinzip arbeitenden Einrichtungen schwer möglich, da diese Einrichtungen unterhalb einer Minimalgeschwindigkeit und insbesondere bei einer Geschwindigkeit Null kaum zu gebrauchen sind. Daher werden in der Praxis zu diesem Zweck Positionssensoren verwendet, die mit Hallelementen und Permanentmagneten ausgerüstet sind. Dies führt jedoch zu anderen Schwierigkeiten, da in Bremsen oft Temperaturen bis zu 500°C auftreten können und Hallelemente als Halbleiterbauelemente höchstens bis nur 150°C betrieben werden können. Ausserdem können sich die Permanentmagnete im Laufe der Zeit demagnetisieren, was bei Bremsen zu Sicherheitsproblemen führen kann.

Eine Anordnung zur Positionserfassung oder zur Geschwindigkeistsmessung gemäss dem Oberbegriff des Anspruchs 1 ist aus der DE-A-1 523 191 bekannt, wo ein mit einem E-förmigen magnetischen Kern versehener Messfühler verwendet wird in einem Verfahren und einer Vorrichtung zur Fernanzeige einer Drehgeschwindindigkeit oder eines Drehwinkels einer sich drehenden gezahnten Scheibe, die aus zwei kappartigen Scheibenhälften besteht. Dabei können in einer Variante die Drehzahlen auch bei einem Stillstand der beiden Scheibenhälften erfasst werden. Auf dem Mittelschenkel des magnetischen Kerns ist eine einzige, von einem Wechselstrom erregte Erregerwicklung und auf den beiden Aussenschenkel je eine Messwicklung angeordnet. Die beiden Messwicklungen sind in einer Variante in einer Differenzschaltung miteinander verbunden. Im Betrieb befinden sich jeweils mehrere Zähne der gezahnten Scheibe zeitweise in Front eines jeden von zwei Luftspalten des magnetischen Kerns.

Ebenfalls bekannt ist die Druckschrift US-A-3 961 214, in der eine Anordnung zur Positionserfassung oder zur Geschwindigkeitsmessung eines beweglichen magnetischen Körpers beschrieben wird, in der ein Messfühler verwendet wird, der zwei getrennte parallele und je eine Spule aufweisende Unterkerne aufweist. Die Spulen sind nicht durch einen Wechselstrom erregt, so dass die Anordnung nicht zur sicheren Messung einer Geschwindigkeit Null geeignet ist.

Der Erfindung liegt die Aufgabe zugrunde, eine Anordnung zur Positionserfassung oder zur Geschwindigkeitsmessung von mindestens teilweise magnetischen Körpern auzugeben, die unter einer Vermeidung der Verwendung von Halbleiterbauelementen und von Permanentmagneten presigüngstig und ohne grossen Aufwand herstellbar ist und mit der auch sehr niedrige geschwindigkeiten, inklusive der geschwindigkeit Null, mit grossem Wirkungsgrad erfasst bzw. gemessen werden können.

Die genannte Aufgabe wird erfindungsgemäss durch die im Anspruch 1 angegebenen merkmale gelöst.
Vorteilhafte Ausgestaltungen der Erfindung ergeben sich aus den Unteransprüchen.

Die Erfindung wird im folgenden anhand der Zeichnung näher erläutert.

Es zeigen:
- Fig. 1: eine prinzipielle Darstellung einer ersten Variante einer Anordnung zur Positions - oder Geschwindigkeitsmessung
- Fig. 2: eine prinzipielle Darstellung einer zweiten Variante der Anordnung,
- Fig. 3: eine teilweise Darstellung einer Ausführungs-Untervariante der zweite Variante der Anordnung,
- Fig. 4: eine teilweise Darstellung einer erfindungsgemässen Anordnung,
- Fig. 5: eine Kennlinie eines Ausgangssignal einer erfindungsgemässen Anordnung und
- Fig. 6: ein Schaltbild einer Auswerteeinrichtung.

Gleiche Bezugszeichen bezeichnen in allen Figuren der Zeichnung gleiche Grössen.

In den Zeichnungen wird der Aufbau und die Arbeitsweise der erfindungsgemässen Anordnung anhand einer Positionserfassung oder Drehzahlmessung eines sich um eine Rotationsachse drehenden Zahnrades erläutert, welches den beweglichen Körper darstellt. Dabei besteht mindestens ein Teil des beweglichen Körpers, beim Zahnrad 1 vorzugsweise seine Zähne 2 und ein angrenzender Teil seiner Nabe, aus ferromagnetischem Material.

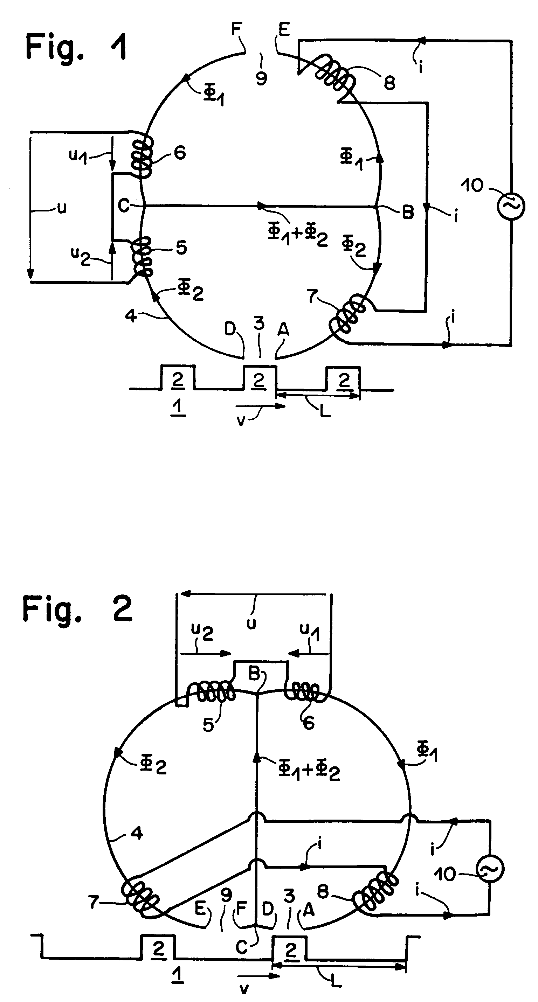

In den Figuren 1 bis 4 sind aus Gründen der zeichnerischen Einfachheit nur jeweils maximal drei Zähne 2 des Zahnrades 1 dargestellt. Aus dem gleichen Grund gilt in der Zeichnung die Annahme, dass der Durchmesser des Zahnrades 1 bedeutend grösser ist als die Dimensionen der anderen Teile der dargestellten Anordnung, so dass im dargestellten Bereich die tangentiale Bewegungsrichtung der Zähne 2 näherungsweise als linear angenommen werden kann. Die Zähne 2 des Zahnrades 1 weisen dann dort eine lineare Geschwindigkeit v auf. In den Figuren 1 bis 4 ist unter anderem jeweils ein senkrecht zur Rotationsachse des Zahnrades 1 verlaufender Querschnitt eines Teils des Zahnrades 1 dargestellt, wobei angenommen wurde, dass der Querschnitt der Zähne 2 vorzugsweise trapezförmig ist.

In allen dargestellten Anordnungen (siehe die Figuren 1 bis 4) ist jeweils mindestens ein mit einem Luftspalt 3 versehener Kern 4 bzw. 4a;4b vorhanden, auf dem Spulen 5, 6, 7 und 8 angeordnet sind. Die Spulen 5 bis 8 bestehen dabei mindesten aus zwei Messspulen 5 und 6 und zwei Erregerspulen 7 und 8. Die Bewegungsrichtung der Zähne 2 des Zahnrades 1 und damit die Bewegungsrichtung des beweglichen Körpers verläuft parallel oder tangential zu einer äusseren Seite des Luftspaltes 3. Ein ferromagnetischer Teil des beweglichen Körpers, nämlich die Zähne 2 des Zahnrades 1, befindet sich dabei während seiner Bewegung mindestens zeitweise in Front des Luftspaltes 3. Die beiden Erregerspulen 7 und 8 sind im Betrieb von mindestens einem Wechselstrom i gespeist zur Erzeugung zweier Magnetflüsse Φ₁ und Φ₂, die am Ausgang der beiden Messspulen 5 und 6 mittels magnetischer Induktion je eine Spannung erzeugen, die in den Figuren 1 bis 3 mit u₁ bzw. u₂ bezeichnet ist. Zur Bildung einer Messspulenkombination 5;6 sind die Windungen der beiden Messpulen 5 und 6 jeweils so in Reihe miteinander verbunden, dass im Betrieb am Ausgang der Messspulenkombination 5;6 eine Spannung u vorhanden ist, die gleich der Differenz der beiden durch die Magnetflüsse Φ₁ und Φ₂ in den einzelnen Messspulen 5 bzw. 6 induzierten Spannungen ist. Der Kern 4 bzw. 4a;4b und die beiden Erregerspulen 7 und 8 sind dabei jeweils so ausgebildet, angeordnet und dimensioniert, dass die beiden im Betrieb vorhandenen Magnetflüsse Φ₁ und Φ₂ in mindestens teilweiser Abwesenheit vor dem Luftspalt 3 des ferromagnetischen Teils des beweglichen Körpers, d. h. in Abwesenheit der Zähne 2 des Zahnrades 1, annähernd gleich gross sind. Der Kern 4 bzw. 4a;4b weist in allen Varianten jeweils mindestens zwei räumlich getrennt angeordnete ferromagnetische Kernteile auf. Die beiden Erregerspulen 7 und 8 sind dann jeweils auf einem der beiden ferromagnetischen Kernteile angeordnet zwecks Erzeugung in den letzteren je eines der beiden Magnetflüsse Φ₁ und Φ₂. Jedem der beiden ferromagnetischen Kernteile ist eine der beiden Messspulen 5 bzw. 6 zugeordnet und die Windungen der beiden Messspulen 5 und 6 sind jeweils auf dem, der jeweiligen Messspule 5 bzw. 6 zugeordneten ferromagnetischen Kernteil angeordnet.

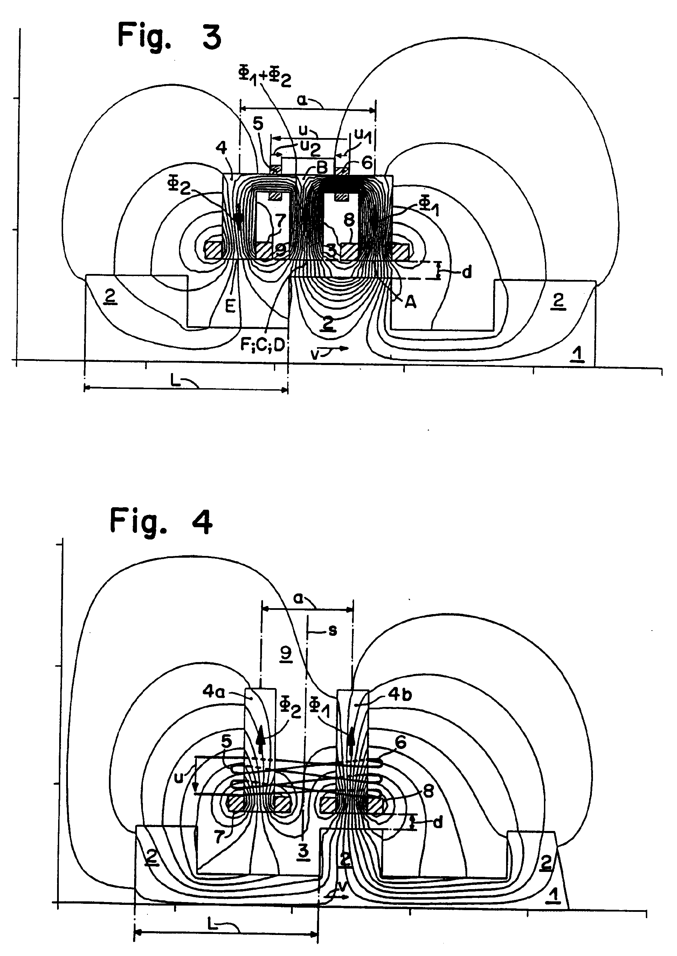

In den beiden, in den Figuren 1 bis 3 dargestellten Varianten weist der Kern 4 jeweils zwei Magnetkreise ABCD und EBCF sowie einen für die beiden Magnetkreise ABCD und EBCF gemeinsamen Mittelsteg BC auf. In der Fig. 3 fallen dabei die drei Punkte F, C und D zusammen und bilden einen einzigen Punkt F;C;D. Die beiden Magnetkreise ABCD und EBCF stellen in den beiden Varianten jeweils die oben erwähnten beiden räumlich getrennt angeordneten ferromagnetischen Kernteile dar. Die beiden Messspulen 5 und 6 und die beiden Erregerspulen 7 und 8 sind dabei jeweils ausserhalb des Mittelsteges BC auf je einem der beiden Magnetkreise ABCD bzw. EBCF angeordnet. Die beiden Messspulen 5 und 6 sind in diesen beiden Varianten jeweils elektrisch so in Reihe geschaltet, dass im Betrieb am Ausgang der Reihenschaltung der beiden Messspulen 5 und 6 eine Spannung u vorhanden ist, die gleich der Differenz u₁-u₂ der beiden durch die Magnetflüsse Φ₁ und Φ₂ in den einzelnen Messspulen 5 bzw. 6 induzierten Spannungen u₁ und u₂ ist. Im Betrieb weisen ausserdem die in den beiden Magnetkreisen ABCD und EBCF fliessenden Magnetflüsse Φ₁ und Φ₂ im gemeinsamen Mittelsteg BC einen gleichen Richtungssinn auf, so dass dort ein Summenmagnetfluss Φ₁+Φ₂ fliesst. Pro ferromagnetischem Kernteil, d. h. pro Magnetkreis ABCD und EBCF, ist mindestens ein Luftspalt 3 bzw. 9 vorhanden, wobei der Luftspalt 3 jeweils zwischen den Punkten A und D sowie der Luftspalt 9 jeweils zwischen den Punkten E und F der beiden Magnetkreise ABCD und EBCF liegt. In der Praxis werden die Erregerspulen 7 und 8 jeweils möglichst nahe beim Luftspalt 3 bzw. 9 auf ihrem Magnetkreis ABCD bzw. EBCF angeordnet.

In der in der Fig. 1 dargestellten Variante sind die beiden Luftspalte 3 und 9 ausserhalb des gemeinsamen Mittelstegs BC beliebig auf ihrem Magnetkreis ABCD bzw. EBCF angeordnet und der ferromagnetische Teil des beweglichen Körpers, d. h. die Zähne 2 des Zahnrades 1, befindet sich nur in Front eines der beiden Luftspalte 3 und 9, nämlich z. B. in Front des Luftspaltes 3. Die Bewegungsrichtung des beweglichen Körpers, d. h. des Zahnrades 1, verläuft in diesem Fall nur parallel bzw. tangential zu einer äusseren Seite eines einzigen der beiden Luftspalte 3 und 9, nämlich des Luftspaltes 3.

In der in der Fig. 2 dargestellten Variante sind die beiden Luftspalte 3 und 9 ausserhalb des gemeinsamen Mittelstegs BC in ihrem Magnetkreis ABCD bzw. EBCF so angeordnet, dass äussere Seiten mindestens der beiden Luftspalten 3 und 9 sich in einer gleichen, in der Darstellung der Zeichung horizontalen Ebene befinden. Die Bewegungsrichtung des beweglichen Körpers, d. h. des Zahnrades 1, verläuft dann parallel oder tangential zu der Ebene und ein ferromagnetischer Teil des beweglichen Körpers, nämlich die Zähne 2 des Zahnrades 1, befindet sich zeitlich abwechselnd in Front eines jeden der beiden Luftspalte 3 und 9. Die Bewegungsrichtung des beweglichen Körpers verläuft in diesem Fall parallel bzw. tangential zu einer äusseren Seite eines jeden der beiden Luftspalte 3 und 9.

Der Mittelsteg BC weist in den beiden Varianten vorzugsweise eine Symmetriefläche auf und die beiden Magnetkreise ABCD und EBCF sind dann vorzugsweise symmetrisch zu der Symmetriefläche des Mittelsteges BC ausgebildet. Der in der zweiten Variante verwendete Kern 4 besitzt dann vorzugsweise einen E-förmigen Querschnitt, wie er in der Fig. 3 dargestellt ist. Ansonsten entspricht die in der Fig. 3 dargestellte Untervariante der in der Fig. 2 dargestellten zweiten Variante.

In der in der Fig. 4 dargestellten erfindungsgemässen Anordnung besteht der Kern 4a;4b aus zwei getrennten Unterkernen 4a und 4b, die flächensymmetrisch zueinander angeordnet sind. Die Symmetriefläche ist in der Fig. 4 mit S bezeichnet. In der Fig. 4 wurde angenommen, dass die beiden Unterkerne 4a und 4b stabförmig und gleich lang sind. Sie sind dann parallel und ihre Enden vorzugsweise bündig zueinander angeordnet. Die Unterkerne 4a und 4b stellen die beiden oben erwähnten ferromagnetischen Kernteile dar, wobei jeweils sowohl ein erstes als auch ein zweites Ende der beiden Unterkerne 4a und 4b durch je einen Luftspalt 3 bzw. 9 voneinander getrennt sind. Die Bewegungsrichtung des beweglichen Körpers verläuft bei der dritten Variante vorzugsweise parallel oder tangential zu einer Schmalseite der Unterkerne 4a und 4b. Die beiden Messspulen 5 und 6 sind zu einer Messspulenkombination 5;6 so miteinander verbunden, dass abwechselnd eine Windung der einen Messspule 5 mit einer Windung der anderen Messspule 6 in Reihe geschaltet ist und zwar so, dass der Richtungssinn der Magnetflüsse Φ₁ und Φ₂ in den beiden Unterkernen 4a und 4b sowie der Wicklungssinn der Windungen der einzelnen Messspulen 5 bzw. 6 um den ihnen zugeordneten Unterkern 4a bzw. 4b jeweils so gewählt sind, dass die von den beiden Magnetflüssen Φ₁ und Φ₂ in den Windungen der Messspulen 5 und 6 induzierten Spannungen in den beiden Messspulen 5 und 6 einen entgegengesetzten Richtungssinn aufweisen, so dass nur die Differenz der beiden Magnetflüsse Φ₁ und Φ₂ am Ausgang der Messspulenkombination 5;6 als Spannung u wirksam ist. In der Fig. 4 wurde angenommem, dass die beiden Magnetflüsse Φ₁ und Φ₂ einen gleichen parallelen Richtungssinn aufweisen. In diesem Fall besitzen die Windungen der Messspulen 5 und 6 vorzugsweise einen entgegengesetzten Windungssinn. Die beiden Magnetflüsse Φ₁ und Φ₂ können aber auch einen entgegengesetzten parallelen Richtungssinn aufweisen. In diesem letzteren Fall ist der Windungssinn der Windungen der Messspulen 5 und 6 vorzugsweise gleichsinnig zu wählen.

In aIlen Varianten sind die beiden Erregerspulen 7 und 8 vorzugsweise annähernd gleich, elektrisch in Reihe geschaltet sowie im Betrieb von einem einzigen Wechselstrom i gespeist, der von einer Wechselstromquelle 10 (siehe die Figuren 1 und 2) geliefert wird, die ihrerseits mit der Reihenschaltung der beiden Erregerspulen 7 und 8 verbunden ist.

In den Figuren 3 und 4 wurden aus Gründen der zeichnerischen Einfachheit die Speisung der Erregerspulen 7 und 8 nicht dargestellt. Dafür wurde dort jeweils ein computerberechnetes Kennlinienfeld der Magnetflüsse Φ₁ und Φ₂ dargestellt.

Eine Zahnperiode L des Zahnrades 1 ist in der zweiten Variante und in der erfindungsgemässen Anordnung jeweils so gross zu wählen, dass wenn ein Zahn 2 des Zahnrades 1 sich in Front eines der beiden Luftspalten 3 oder 9 befindet, kein anderer Zahn 2 des Zahnrades 1 sich in Front des anderen der beiden Luftspalten 9 oder 3 befindet. Insbesondere ist bei den in den Figuren 3 und 4 dargestellten Anordnungen die Zahnperiode L des Zahnrades 1 grösser oder gleich dem doppelten Mittenabstand a der beiden äusseren Stege des mit einem E-förmigen Querschnitt versehenen Kerns 4 bzw. der beiden Unterkerne 4a und 4b zu wählen. In diesem Fall können die zweite Variante und die erfindungsgemässe Anordnung einen doppelt so grossen Wirkungsgrad besitzen als die erste Variante.

Wenn bei der Rotation des Zahnrades 1 in Front der Luftspalte 3 und 9 nur Impulslücken des Zahnrades 1 vorhanden sind, dann sind ähnlich wie bei der Abwesenheit des Zahnrades 1 die beiden Magnetflüsse Φ₁ und Φ₂ genau gleich. Wenn dagegen bei der Rotation des Zahnrades 1 in Front eines und nur eines Luftspaltes 3 bzw. 9 ein Zahn 2 des Zahnrades 1 vorhanden ist, dann verkleinert dieser Zahn 2 aus ferromagnetischem Material den Luftspalt 3 bzw. 9 z. B. auf einen Wert 2d, wenn d einen minimalen radialen Abstand zwischen der Zahnspitze des Zahnes 2 und den sich in Front desselben befindlichen äusseren Steg des Kerns 4 (siehe Fig. 3) oder den sich in Front des Zahnes 2 befindlichen Unterkern 4a bzw. 4b (siehe Fig. 4) bezeichnet. Der Abstand d besitzt vorzugsweise einen Wert von 0,1 bis 3 mm. Der andere Luftspalt 9 bzw. 3 bleibt dagegen unverändert, so dass stark unterschiedliche Magnetflüsse Φ₁ und Φ₂ fliessen, was in den Figuren 3 und 4 durch die Anzahl Feldlinien des jeweiligen Magnetflusses Φ₁ bzw. Φ₂ symbolisch dargestellt ist. Es entsteht somit eine relativ grosse Magnetflussdifferenz Φ₁-Φ₂, die mittels der Messspulenkombination 5;6 und eines daran angeschlossenen Voltmeters als Wechselspannung u konstanter Amplitude gemessen werden kann.

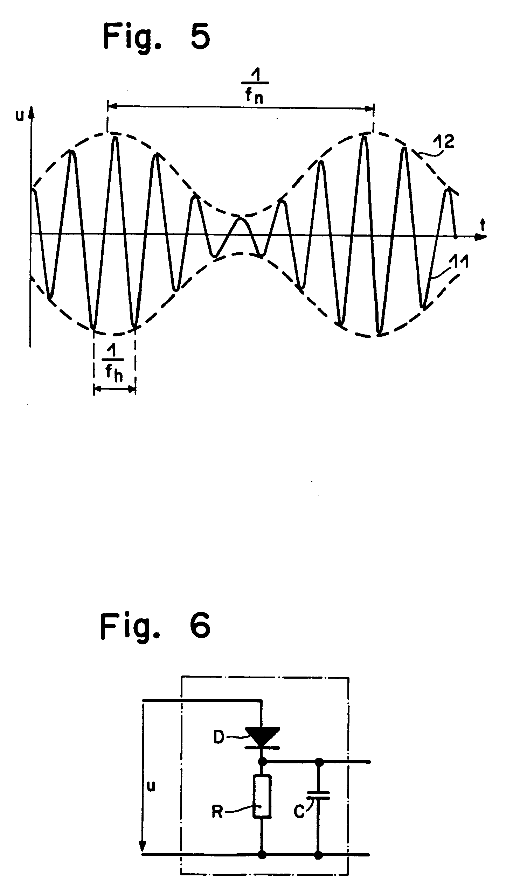

Bei einem sich drehenden Zahnrad 1 stellt die Wechsespannung u (siehe Fig. 5) nur ein höher frequentes Trägersignal 11 dar, dessen Frequenz fₕ ist und dessen Amplitude durch die Drehbewegung des Zahnrades 1 moduliert wird. Die Frequenz fₙ eines so erzeugten niederfrequenteren Modulationssignals 12 ist proportional der Drehzahl des Zahnrades 1 und kann mittels eines Detektors ermittelt werden. Das mittels des Modulationssignals 12 amplitudenmodulierte Trägersignal 11 ist in der Fig. 5 in Funktion der Zeit t dargestellt.

An der Messspulenkombination 5;6 ist somit jeweils ein in den Figuren 1 bis 4 nicht dargestelltes Auswertegerät anzuschliessen, welches entweder ein Voltmeter oder ein Detektor ist. Ein Aufbau des letzteren ist aus der Fig. 6 ersichtlich. Der dort dargestellte, an sich bekannte Detektor besteht aus der Reihenschaltung D;R;C einer Diode D und eines RC-Parallelkreises R;C. Der letztere besteht aus einem Widerstand R und einem Kondensator C, die beide parallel geschaltet sind. Die Ausgangsspannung u der Messspulenkombination 5;6 speist den Eingang des Detektors, der durch die beiden Pole der Reihenschaltung D;R;C gebildet ist, während der Ausgang des Detektors durch die beiden Pole der RC-Parallelschaltung R;C gebildet ist.

## Patentansprüche

1. Anordnung zur Positionserfassung oder zur Geschwindigkeitsmessung eines mindestens teilweise magnetischen und mit Zähnen (2) versehenen beweglichen Körpers (1), mit einem mit mindestens zwei Luftspalten (3, 9) versehenen Kern (4 bzw. 4a;4b) auf dem eine erste, im Betrieb von einem Wechselstrom (i) gespeiste Erregerspule (7 bzw. 8) und zwei Messspulen (5, 6) angeordnet sind, wobei der Kern (4 bzw. 4a;4b) mindestens zwei magnetische Kernteile aufweist, in denen im Betrieb durch einen Wechselstrom je ein Magnetfluss (Φ1 bzw. Φ2) erzeugt wird, und wobei ein magnetischer Teil des beweglichen Körpers (1) sich mindestens zeitweise in Front eines der Luftspalte (3, 9) befindet sowie jedem der beiden magnetischen Kernteile eine der beiden Messspulen (5, 6) zugeordnet ist, deren Windungen jeweils auf dem der jeweiligen Messspule (5 bzw. 6) zugeordneten magnetischen Kernteil angeordnet sind, wobei zur Bildung einer Messspulenkombination (5;6) die Windungen der beiden Messpulen (5, 6) so in Reihe miteinander verbunden sind, dass im Betrieb am Ausgang der Messspulenkombination (5;6) eine Spannung (u) vorhanden ist, die gleich der Differenz von zwei durch die Magnetflüsse (Φ1, Φ2) in den einzelnen Messspulen (5 bzw. 6) induzierten Spannungen ist, und wobei der Kern (4 bzw. 4a;4b) so ausgebildet und dimensioniert ist, dass im Betrieb die beiden Magnetflüsse (Φ1, Φ2) annähernd gleich gross sind in mindestens teilweiser Abwesenheit des magnetischen Teils des beweglichen Körpers (1), dadurch gekennzeichnet, dass der magnetische Teil des beweglichen Körpers (1) und die magnetische Kernteile des Kerns (4 bzw. 4a;4b) ferromagnetisch sind, dass eine zweite, im Betrieb von einem Wechselstrom gespeiste Erregerspule (8 bzw. 7) vorhanden ist, dass die erste und die zweite Erregerspule (7, 8) jeweils auf einem der beiden ferromagnetischen Kernteile angeordnet sind, in denen sie im Betrieb mit Hilfe eines Wechselstromes jeweils einen der beiden Magnetflüsse (Φ1, Φ2) erzeugen, dass die erste und zweite Erregerspule (7, 8) so ausgebildet, angeordnet und dimensioniert sind, dass die beiden im Betrieb vorhandenen Magnetflüsse (Φ1, Φ2) annähernd gleich gross sind in mindestens teilweiser Abwesenheit des ferromagnetischen Teils des beweglichen Körpers (1) und dass der Kern (4a;4b) aus zwei getrennten Unterkernen (4a, 4b) besteht, die flächensymmetrisch zueinander angeordnet sind und die die beiden ferromagnetischen Kernteile darstellen, wobei jeweils sowohl ein erstes als auch ein zweites Ende der beiden Unterkerne (4a, 4b) durch je einen Luftspalt (3, 9) voneinander getrennt sind, dass die beiden Messspulen (5, 6) so miteinander verbunden sind, dass abwechselnd eine Windung der einen Messspule (5) mit einer Windung der anderen Messspule (6) in Reihe geschaltet ist und zwar so, dass der Richtungssinn der Magnetflüsse (Φ₁, Φ₂) in den beiden Unterkernen (4a, 4b) sowie der Wicklungssinn der Windungen der einzelnen Messspulen (5, 6) um den ihnen zugeordneten Unterkern (4a bzw. 4b) jeweils so gewählt sind, dass die von den beiden Magnetflüssen (Φ₁, Φ₂) in den Windungen der Messspulen (5, 6) induzierten Spannungen in den beiden Messspulen (5, 6) einen entgegengesetzten Richtungssinn aufweisen, so dass nur die Differenz der beiden Magnetflüsse (Φ₁, Φ₂) am Ausgang der Messspulenkombination (5;6) wirksam ist.

2. Anordnung nach Anspruch 1, dadurch gekennzeichnet, dass die beiden Unterkerne (4a, 4b) stabförmig sind und parallel zueinander angeordnet sind.

3. Anordnung nach Anspruch 1 oder 2, dadurch gekennzeichnet, dass eine Bewegungsrichtung des beweglichen Körpers (1) parallel oder tangential zu einer Schmalseite der Unterkerne (4a, 4b) verläuft.

4. Anordnung nach einem der Ansprüche 1 bis 3, dadurch gekennzeichnet, dass die beiden Erregerspulen (7, 8) annähernd gleich sind, elektrisch in Reihe geschaltet sind sowie im Betrieb von einem einzigen Wechselstrom (i) gespeist sind.

5. Anordnung nach einem der Ansprüche 1 bis 4, dadurch gekennzeichnet, dass an der Messspulenkombination (5;6) ein Auswertegerät angeschlossen ist.

6. Anordnung nach Anspruch 5, dadurch gekennzeichnet, dass das Auswertegerät ein Voltmeter oder ein Detektor ist.

## Claims

1. An assembly for detecting the position or for measuring the speed of an at least partially magnetic movable body (1) provided with teeth (2), comprising a core (4 or 4a; 4b) provided with at least two air gaps (3, 9), on which are arranged a first exciter coil (7 or 8) which is supplied in operation with an alternating current (i), and two measuring coils (5, 6), wherein the core (4 or 4a; 4b) has at least two magnetic core portions in each of which in operation a respective magnetic flux (Φ1 and Φ2) is produced by means of an alternating current, and wherein a magnetic portion of the movable body (1) is disposed at least at times in front of one of the air gaps (3, 9) and associated with each of the two magnetic core portions is one of the two measuring coils (5, 6), the turns of which are respectively arranged on the magnetic core portion associated with the respective measuring coil (5 or 6), wherein to form a measuring coil combination (5; 6) the turns of the two measuring coils (5, 6) are so connected in series with each other that in operation there is at the output of the measuring coil combination (5; 6) a voltage (u) which is equal to the difference of two voltages induced by the magnetic fluxes (Φ1, Φ2) in the individual measuring coils (5 and 6 respectively), and wherein the core (4 or 4a; 4b) is of such a configuration and dimensions that in operation the two magnetic fluxes (Φ1, Φ2) are approximately equal in the at least partial absence of the magnetic portion of the movable body (1), characterised in that the magnetic portion of the movable body (1) and the magnetic core portions of the core (4 or 4a; 4b) are ferromagnetic, that there is a second exciter coil (8 or 7) which in operation is fed by an alternating current, that the first and the second exciter coils (7, 8) are arranged on respective ones of the two ferromagnetic core portions in which in operation they produce a respective one of the two magnetic fluxes (Φ1, Φ2) by means of an alternating current, that the first and second exciter coils (7, 8) are of such a configuration, arrangement and dimensions that the two magnetic fluxes (Φ1, Φ2) occurring in operation are approximately equal in the at least partial absence of the ferromagnetic portion of the movable body (1) and that the core (4a; 4b) comprises two separate sub-cores (4a, 4b) which are arranged in plane symmetry relationship with each other and which represent the two ferromagnetic core portions, wherein both a first and also a second end of the two sub-cores (4a, 4b) are respectively separated from each other by a respective air gap (3, 9), that the two measuring coils (5, 6) are so connected together that a turn of the one measuring coil (5) is alternately connected in series with a turn of the other measuring coil (6), more specifically in such a way that the direction of the magnetic fluxes (Φ1, Φ2) in the two sub-cores (4a, 4b) and the winding direction of the turns of the individual measuring coils (5, 6) around the sub-cores (4a and 4b respectively) associated therewith are respectively so selected that the voltages induced by the two magnetic fluxes (Φ1, Φ2) in the turns of the measuring coils (5, 6) are in opposite directions in the two measuring coils (5, 6) so that only the difference of the two magnetic fluxes (Φ1, Φ2) is effective at the output of the measuring coil combination (5; 6).

2. An assembly according to claim 1 characterised in that the two sub-cores (4a, 4b) are of a bar configuration and are arranged parallel to each other.

3. An assembly according to claim 1 or claim 2 characterised in that a direction of movement of the movable body (1) extends parallel or tangential to a narrow side of the sub-cores (4a, 4b).

4. An assembly according to one of claims 1 to 3 characterised in that the two exciter coils (7, 8) are approximately the same, are electrically connected in series and in operation are fed by a single alternating current (i).

5. An assembly according to one of claims 1 to 4 characterised in that an evaluation device is connected to the measuring coil combination (5; 6).

6. An assembly according to claim 5 characterised in that the evaluation device is a voltmeter or a detector.

## Revendications

1. Dispositif pour détecter la position ou mesurer la vitesse d'un corps mobile (1), au moins partiellement magnétique et équipé de dents (2), et comportant un noyau (4 ou 4a; 4b) équipé d'au moins deux entrefers (3, 9) et sur lequel sont situées une première bobine d'excitation (7 ou 8) alimentée en fonctionnement par un courant alternatif (i), et deux bobines de mesure (5, 6), et dans lequel le noyau (4 ou 4a; 4b) comporte au moins deux parties magnétiques, dans lesquelles en fonctionnement un flux magnétiques respectif (Φ1 et Φ2) est produit par un courant alternatif, et dans lequel une partie magnétique du corps mobile (1) est située au moins par instants en face de l'un des entrefers (3, 9), et à chacune des deux parties magnétiques du noyau est associée l'une des deux bobines de mesure (5, 6), dont les spires sont disposées respectivement sur la partie magnétique du noyau, qui est associée à la bobine de mesure respective (5 ou 6), et dans lequel pour la formation d'un ensemble combiné de bobines de mesure (5; 6), les spires des deux bobines (5, 6) de mesure sont reliées entre elles en série de sorte que, pendant le fonctionnement, à la sortie de l'ensemble combiné de bobines de mesure (5; 6) est présente une tension (u), qui est égale à la différence de deux tensions induites par les flux magnétiques (Φ1, Φ2) dans les différentes bobines de mesure (5 ou 6), et dans lequel le noyau (4 ou 4a; 4b) est agencé et dimensionné de telle sorte qu'en fonctionnement, les deux flux magnétiques (Φ1, Φ2) sont approximativement égaux pendant l'absence au moins partielle de la partie magnétique du corps mobile (1), caractérisé en ce que la partie magnétique du corps mobile (1) et les parties magnétiques du noyau (4 ou 4a; 4b) sont ferromagnétiques, qu'il est prévu une seconde bobine d'excitation (8 ou 7) alimentée en fonctionnement par un courant alternatif, que les première et seconde bobines d'excitation (7, 8) sont disposées chacune sur l'une des deux parties ferromagnétiques du noyau, dans lesquelles elles produisent, en fonctionnement, respectivement l'un des deux flux magnétiques (Φ1, Φ2) à l'aide d'un courant alternatif, que les première et seconde bobines d'excitation (7, 8) sont agencées, disposées et dimensionnées de telle sorte que les deux flux magnétiques (Φ1, Φ2), qui sont présents en fonctionnement, sont approximativement égaux, pendant l'absence au moins partielle de la partie ferromagnétique du corps mobile (1), et que le noyau (4a; 4b) est constitué de deux noyaux partiels séparés (4a, 4b), qui sont disposés avec des surfaces réciproquement symétriques et qui représentent les deux parties ferromagnétiques du noyau, auquel cas respectivement aussi bien une première extrémité qu'une seconde extrémité des deux noyaux partiels (4a, 4b) sont séparées l'une de l'autre par un entrefer respectif (3, 9), que les deux bobines de mesure (5, 6) sont reliées entre elles de telle sorte qu'alternativement une spire d'une bobine de mesure (5) est branchée en série avec une spire de l'autre bobine de mesure (6) et ce de telle sorte que le sens des flux magnétiques (Φ₁, Φ₂) dans les deux noyaux partiels (4a, 4b) ainsi que le sens d'enroulement des spires des différentes bobines de mesure (5, 6) autour des noyaux partiels (4a ou 4b) qui leur sont associés, sont choisis respectivement de telle sorte que les tensions, qui sont induites par les deux flux magnétiques (Φ₁, Φ₂) dans les spires des bobines de mesure (5, 6) ont des sens opposés de sorte que seule la différence des deux flux magnétiques (Φ₁, Φ₂) agit à la sortie de l'ensemble combiné de bobines de mesure (5; 6).

2. Dispositif suivant la revendication 1, caractérisé par le fait que les deux noyaux partiels (4a, 4b) sont réalisés en forme de barreaux et sont parallèles.

3. Dispositif selon la revendication 1 ou 2, caractérisé en ce qu'une direction de déplacement du corps mobile (1) est parallèle ou tangentielle à un petit côté des noyaux partiels (4a, 4b).

4. Dispositif selon l'une des revendications 1 à 3, caractérisé en ce que les deux bobines d'excitation (7, 8) sont approximativement identiques, sont branchées électriquement en série et sont alimentées, en fonctionnement, par un seul courant alternatif (i).

5. Dispositif selon l'une des revendications 1 à 4, caractérisé en ce qu'un appareil d'évaluation est raccordé à l'ensemble combiné de bobines de mesure (5; 6).

6. Dispositif selon la revendication 5, caractérisé en ce que l'appareil d'évaluation est un voltmètre ou un détecteur.
